# EUROPEAN PATENT APPLICATION

(11) **EP 3 367 091 A1**
(43) Date of publication of application: **29.08.2018**
(21) Application number: 18153943.8
(22) Date of filing: 29.01.2018
(51) Int. Cl.: G01N 30/32, G01N 30/62

(54) **GAS CHROMATOGRAPH**

(30) Priority: 22.02.2017 JP 2017031522
(71) Applicant: Shimadzu Corporation, Kyoto-shi Kyoto 604-8511 (JP)
(72) Inventor: MASUDA, Shingo, Kyoto-shi, Kyoto 604-8511 (JP)
(74) Representative: Webster, Jeremy Mark

(57) **Abstract**

A gas chromatograph is provided with a separation column, a column oven, a sample vaporization unit, a carrier gas supply unit configured to supply a carrier gas to the sample vaporization unit, a detector, a carrier gas flow rate control unit configured to control a flow rate of a carrier gas to be supplied from the carrier gas supply unit to the sample vaporization unit so that a column linear velocity becomes constant, a detector gas supply unit configured to supply a detector gas, and a detector gas flow rate control unit configured to control the flow rate of the detector gas so that a total flow rate of the carrier gas to be introduced into the detector and the same type of a detector gas as the carrier gas becomes a preset constant flow rate.

## Description

### Technical Field

The present invention relates to a gas chromatograph.

### Background Art

In a gas chromatograph analysis, a programmed temperature gas chromatography in which an analysis is performed while raising a temperature of a separation column to shorten the analysis time has been performed. In the programmed temperature gas chromatography, the viscosity of the carrier gas flowing through the separation column rises as the column temperature rises. As a result, a phenomenon in which the flow velocity of the carrier gas flowing through the separation column decreases occurs. For this reason, conventionally, it has been performed to control the carrier gas supply flow rate so as to raise the gas pressure according to the rise in the column temperature.

Here, an HETP (Height Equivalent to a Theoretical Plate) value is known as an index representing separation performance of a separation column. The HETP value is obtained by dividing a length of a separation column by a theoretical plate of the separation column, and indicates that the separation performance becomes better as the value becomes smaller. This HETP value does not depend on the inner diameter and the length of the separation column, but depends on the linear velocity of the carrier gas, the type of the carrier gas, and the temperature of the separation column. For each type of the carrier gas, there exists a linear velocity of the carrier gas at which the HETP becomes minimum.

Therefore, it has been proposed and also implemented to control the carrier gas supply flow rate so that the linear velocity of the carrier gas in the separation column (hereinafter referred to as "column linear velocity") becomes constant (see Patent Document 1) . In this method, based on the relationship of the column linear velocity, the viscosity of the carrier gas, the length/inner diameter of the separation column, the temperature, and the inlet pressure of the separation column, a target value of the inlet pressure of the separation column required to set a column linear velocity to a predetermined value is obtained by calculations, and the supply flow rate of the carrier gas is controlled so that the inlet pressure of the separation column becomes the target value calculated by the calculations.

### Prior Art

### Patent Document

Patent Document 1: Japanese Unexamined Patent Application Publication No. 5-333013

### SUMMARY OF THE INVENTION

### Problems to be Solved by the Invention

By keeping the column linear velocity constant, it is possible to stabilize the separation performance of the separation column. On the other hand, in this method, the carrier gas supply flow rate is controlled so that the inlet pressure of the separation column becomes the target value calculated by the calculations. Therefore, the flow rate of the carrier gas flowing through the separation column does not become constant. For this reason, the flow rate of the gas to be supplied to the detector through the separation column fluctuates with the change of the column temperature, and also varies depending on the target column linear velocity and the type of the carrier gas.

In a detector, such as, e.g., an FID (flame ionization detector), an FPD (flame photometric detector), and an FTD (frame thermionic detector) for use in a gas chromatograph, the flow rate of the gas to be supplied to the detector has an influence on the detection sensitivity. Therefore, when the flow rate of the gas to be supplied to the detector changes, the detection sensitivity of the detector also changes. As a result, due to the change in the column temperature by a programmed temperature gas chromatography, the change in the type of the carrier gas, etc., the detection sensitivity of the detector changes.

As another method different from a method of keeping the column linear velocity constant, there also is a method in which the supply flow rate of the carrier gas is controlled so as to keep the flow rate of the carrier gas flowing through the separation column constant. When the flow rate of the carrier gas flowing through the separation column is kept constant, the flow rate of the gas to be supplied to the detector becomes constant, which in turn can stabilize the detection sensitivity of the detector. However, when the flow rate of the carrier gas flowing through the separation column is controlled to be constant, the column linear velocity does not become constant, and therefore the separation performance of the separation column becomes unstable.

As described above, in a programmed temperature gas chromatography in a conventional gas chromatograph, there is a trade-off relationship between stabilizing the separation performance of a separation column and stabilizing the detection sensitivity of a detector. Therefore, it was difficult to stabilize both of them at a high level.

The present invention was made in view of such problems, and an object of the present invention is to provide a gas chromatograph capable of stabilizing both separation performance of a separation column and detection sensitivity of a detector in an analysis performed while changing a temperature, such as, a programmed temperature gas chromatography.

### Means for Solving the Problems

A gas chromatograph according to the present invention is provided with a separation column configured to separate a sample for each component, a column oven configured to accommodate the separation column and control a temperature of the separation column, a sample vaporization unit connected to one end side of the separation column and configured to vaporize an injected sample, a carrier gas supply unit configured to supply a carrier gas for introducing a sample gas vaporized at the sample vaporization unit to the separation column to the sample vaporization unit, a detector connected to the other end side of the separation column and configured to detect a sample component separated in the separation column, a carrier gas flow rate control unit configured to control a flow rate of a carrier gas to be supplied from the carrier gas supply unit to the sample vaporization unit so that a column linear velocity becomes constant, a detector gas supply unit configured to supply at least one type of a detector gas including a same type of a gas as the carrier gas to the detector, and a detector gas flow rate control unit configured to control the flow rate of the detector gas to be supplied to the detector from the detector gas supply unit so that a total flow rate of the carrier gas to be introduced into the detector and a same type of a detector gas as the carrier gas becomes a preset constant flow rate.

In a preferred embodiment of the present invention, the gas chromatograph is further provided with a carrier gas setting unit configured to set a type of the carrier gas to be supplied to the sample vaporization unit by the carrier gas supply unit. The detector gas flow rate control unit is configured to control a flow rate of the detector gas so that when a same type of a detector gas as the carrier gas set by the carrier gas setting unit is present, a total flow rate of the detector gas and the carrier gas to be introduced into the detector becomes a preset constant flow rate.

In the aforementioned embodiment, for example, in the case in which the type of a carrier gas is changed, when the type of the carrier gas is set to a device, the detector gas flow rate control unit identifies the same type of the detector gas as a set carrier gas, and automatically controls the flow rate of the detector gas so that the total flow rate of the carrier gas to be introduced into the detector and its detector gas becomes a predetermined flow rate. Therefore, by simply setting the type of the carrier gas to the device by a user, even if the user is not concerned specifically about the flow rate control of the detector gas, the total flow rate of the carrier gas to be introduced into the detector and its detector gas will be maintained constant. This prevents the detection sensitivity of the detector from changing for each type of the carrier gas.

### [Effects of the Invention]

In the gas chromatograph of the present invention, the flow rate of the carrier gas is controlled so that the column linear velocity becomes constant and the flow rate of the detector gas is controlled so that the total flow rate of the carrier gas to be introduced into the detector and the same type of a detector gas as the carrier gas becomes a preset constant flow rate. Therefore, it is possible to achieve both the stabilization of the separation performance of the separation column and the stabilization of the detection sensitivity of the detector. As a result, the separation performance and the detection sensitivity can be kept constant even if the column temperature changes temporally by the programmed temperature gas chromatography, which can improve the reproducibility of the analysis and the accuracy of the quantification.

### BRIEF DESCRIPTION OF THE DRAWINGS

FIG. 1 is a schematic configuration diagram showing one embodiment of a gas chromatograph.
FIG. 2 is a flowchart showing a specifying procedure of a detector gas of a flow rate control target of the embodiment.
FIG. 3 is a flowchart showing a flow rate control procedure of a carrier gas and a detector gas in the embodiment.
FIG. 4 is a schematic configuration diagram for explaining one example of a specific mode of the embodiment.
FIG. 5 is a graph showing an example of a temporal change in each gas flow rate in the case (A) of a prior art and the case (B) of the embodiment shown in FIG. 4.
FIG. 6 is a schematic configuration diagram for explaining another example of a specific mode of the embodiment.
FIG. 7 is a graph showing an example of a temporal change in each gas flow rate in the case (A) of a prior art and the case (B) of the embodiment shown in FIG. 6.

### EMBODIMENTS FOR CARRYING OUT THE INVENTION

Hereinafter, embodiments of a gas chromatograph will be described with reference to the drawings.

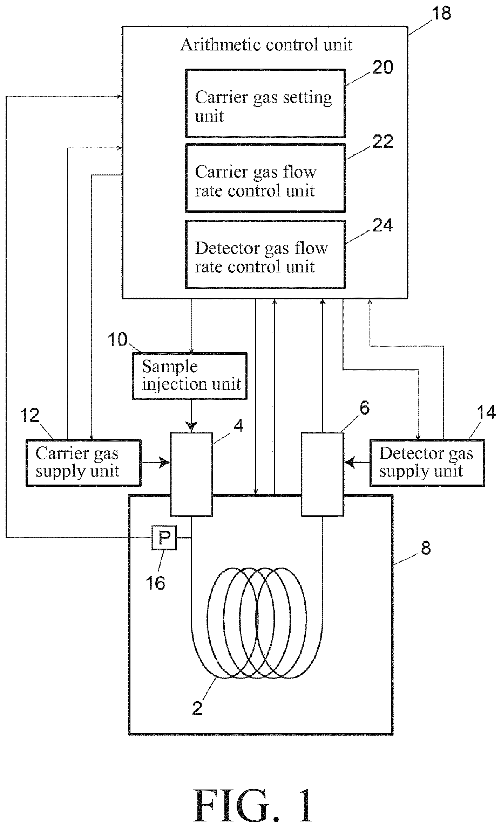

First, with reference to FIG. 1, a schematic configuration of an example of a gas chromatograph will be described.

A sample vaporization unit 4 is connected to one end side of a separation column 2, and a detector 6 is connected to the other end side of the separation column 2. The separation column 2 is accommodated in a column oven 8, and the sample vaporization unit 4 and the detector 6 are fixed to a housing of the column oven 8. Although not illustrated, a heater and a temperature sensor are provided in the column oven 8, and the output of the heater is controlled so that the detected temperature of the temperature sensor becomes a set temperature. As a result, the temperature of the separation column 2 is adjusted to the set temperature.

A sample injection unit 10 for injecting a sample into the sample vaporization unit 4, a carrier gas supply unit 12 for supplying a carrier gas to the sample vaporization unit 4, and a detector gas supply unit 14 for supplying a detector gas to the detector 6 are provided.

The sample injection unit 10 injects a liquid state sample from a sample inlet provided at the sample vaporization unit 4, and is realized by, for example, an autosampler.

The carrier gas supply unit 12 supplies a gas, such as, e.g., an H₂ gas, a He gas, a N₂ gas, and an Ar gas, as a carrier gas to the sample vaporization unit 4.

The detector gas supply unit 14 supplies at least one type of a gas necessary for detection as a detector gas to the detector 6. For the detector 6, an FID, an FPD, an FTD, etc., are used. For example, in the case in which the detector 6 is an FID, a makeup gas is used as necessary as well as air and an H₂ gas as a detector gas. As the makeup gas, in many cases, the same type of a gas as the carrier gas, such as, e.g., a He gas, a N₂ gas, etc., is used.

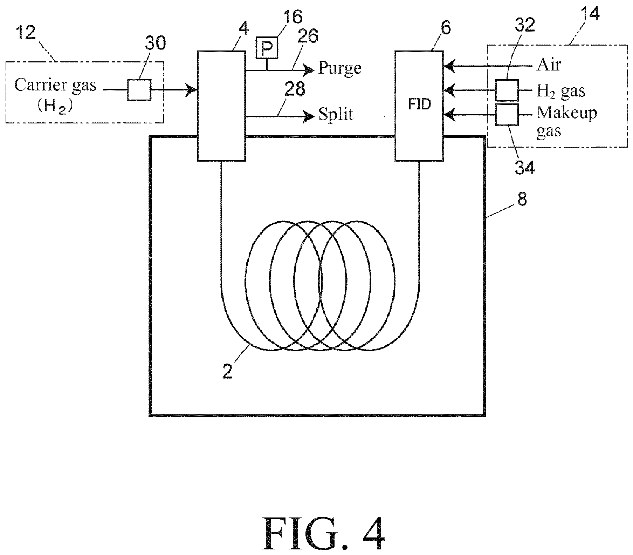

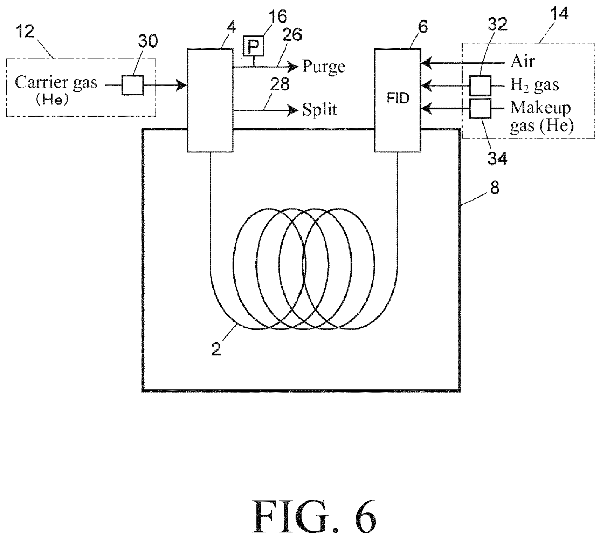

Further, a pressure sensor 16 for detecting the inlet pressure of the separation column 2 is provided. In FIG. 1, it is illustrated such that the pressure sensor 16 is provided in the flow path communicating with the separation column 2, but the position of the pressure sensor 16 may be any position as long as the inlet pressure of the separation column 2 can be detected. For example, in the specific embodiments shown in FIGs. 4 and 6, which will be described later, a pressure sensor 16 is provided on the purge flow path 26 for discharging the purge gas from the sample vaporization unit 4.

The sample injected into the sample vaporization unit 4 by the sample injection unit 10 is vaporized in the heating furnace provided in the sample vaporization unit 4 into a sample gas and is transported to the separation column 2 by the carrier gas from the carrier gas supply unit 12 and separated. Each sample component separated in the separation column 2 is introduced to the detector 6 together with the carrier gas and detected.

This gas chromatograph is equipped with an arithmetic control unit 18 which performs an operation control of the whole apparatus. The arithmetic control unit 18 is configured to perform, in addition to the temperature control in the column oven 8, the sample injection operation by the sample injection unit 10, and the arithmetic processing based on the detection signal from the detector 6, the control of the carrier gas supply flow rate from the carrier gas supply unit 12, and the control of the detector gas supply flow rate from the detector gas supply unit 14. The arithmetic control unit 18 is realized by, for example, a dedicated computer or a general-purpose personal computer.

In order to realize the function of controlling the carrier gas supply flow rate from the carrier gas supply unit 12 and the function of controlling the detector gas supply flow rate from the detector gas supply unit 14, the arithmetic control unit 18 is equipped with a carrier gas setting unit 20, a carrier gas flow rate control unit 22, and a detector gas flow rate control unit 24. The carrier gas setting unit 20, the carrier gas flow rate control unit 22, and the detector gas flow rate control unit 24 are functions which are obtained when arithmetic elements such as a microcomputer built-in in the arithmetic control unit 18 execute a program.

The carrier gas setting unit 20 is configured to set the type of the gas used as a carrier gas. The setting of the carrier gas may also be carried out, for example when the carrier gas setting mode is selected, by displaying a plurality of types of gases as the carrier gas candidates and making a user select the type of the gas to be used as the carrier gas among them. The type of the set carrier gas is used to control the detector gas flow rate which will be described later.

The carrier gas flow rate control unit 22 is configured to control the carrier gas supply flow rate from the carrier gas supply unit 12 to the sample vaporization unit 4 so that the average linear velocity (column linear velocity) of the carrier gas in the separation column 2 becomes a preset constant speed. The method of controlling the carrier gas flow rate so as to keep the column linear velocity constant may be the same method as the method disclosed in Patent Document 1 (Japanese Unexamined Patent Application Publication No. 5-333013). That is, the target value of the inlet pressure of the separation column 2 necessary for setting the column linear velocity to a preset velocity is calculated, for example at regular time intervals, using the temperature of the separation column 2, the viscosity of the carrier gas, the inner diameter /length of the separation column 2, and the carrier gas supply flow rate from the carrier gas supply unit 12 is feedback-controlled so that the pressure detected by the pressure sensor 16 becomes the target value calculated by calculations.

The detector gas flow rate control unit 24 controls the detector gas supply flow rate from the detector gas supply unit 14 so that in the case in which the same type of the gas as the carrier gas is included in the detector gas to be supplied to the detector 6, the total flow rate of the carrier gas to be supplied to the detector 6 and the same type of the detector gas as the carrier gas becomes a preset constant flow rate. In the case in which the same type of the gas as the carrier gas is not included in the detector gas, the detector gas flow rate control unit 24 controls the detector gas supply flow rate from the detector gas supply unit 14 so that the flow rate of each detector gas becomes constant at a preset flow rate.

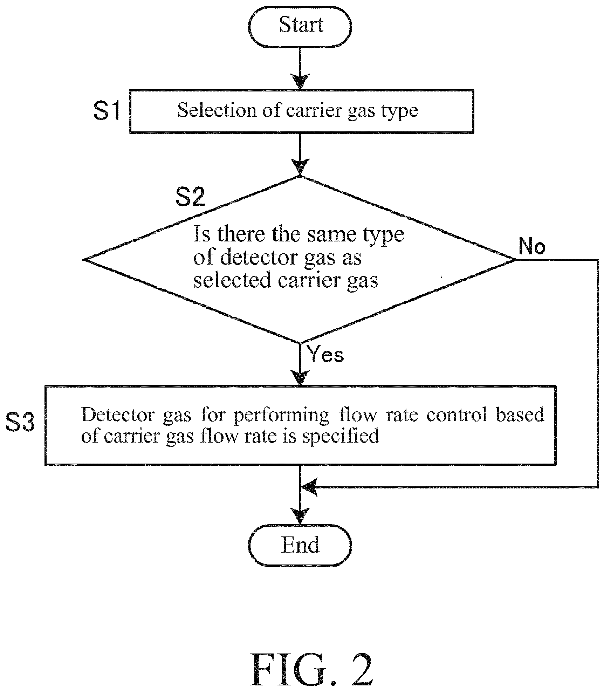

The flowchart in FIG. 2 shows an example of an operation for specifying a detector gas which is a flow rate control target. This operation is performed, for example, when the analysis is initiated or when the type of the carrier gas is changed. As a premise of this operation, it is assumed that the type of the gas used as the detector gas is set and registered in the arithmetic control unit 18.

When the analysis is initiated or the type of the carrier gas is changed, the type of the carrier gas (a H₂ gas, a He gas, a N₂ gas, an Ar gas, etc.) to be used is set and registered in the arithmetic control unit 18. In this example, it is configured to make a user select the type of the gas to be used as the carrier gas from the plurality of gas types.

By the function of the carrier gas setting unit 20, when a user selects the type of the carrier gas (Step S1), the detector gas flow rate control unit 24 judges whether or not the same type of the gas as the selected carrier gas is included in the detector gas (Step S2). If it is included, the detector gas is specified (Step S3). The detector gas flow rate control unit 24 controls the detector gas specified here based on the flow rate of the carrier gas. In the case in which the same type of a gas as the carrier gas is not included in the detector gas, the flow rate of each detector gas will be controlled to be constant regardless of the carrier gas flow rate.

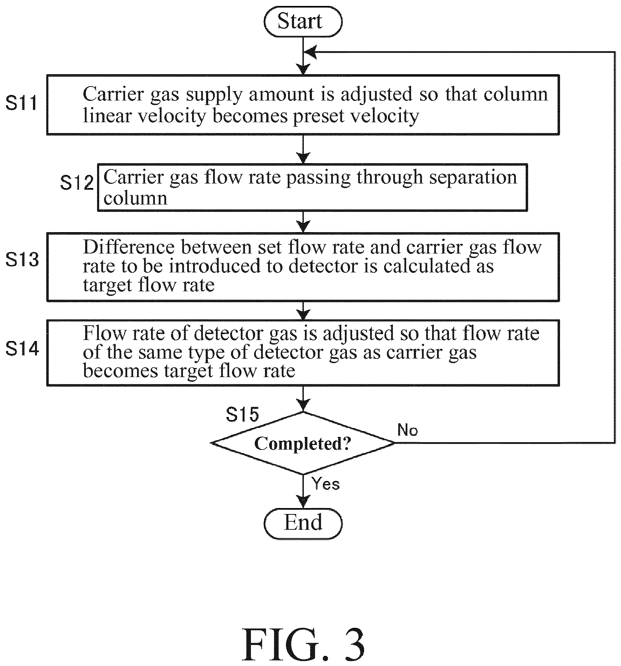

Next, an example of the flow rate control operation of the carrier gas and the detector gas during analysis will be described with reference to FIG. 1 and the flowchart of FIG. 3. As a premise for this operation, the same type of a gas as the carrier gas is included in the detector gas. The flow rate of each detector gas to be introduced to the detector 6 is preset. The set value of the flow rate of each detector gas to be introduced to the detector 6 is called "set flow rate".

First, the carrier gas flow rate control unit 22 adjusts the carrier gas supply flow rate by the aforementioned method so that the column linear velocity always becomes a preset constant speed (Step S11). The target column linear velocity is a speed at which for example the HEPT value becomes minimum (separation performance is maximum). When the carrier gas supply flow rate is adjusted by the carrier gas flow rate control unit 22, the detector gas flow rate control unit 24 calculates the flow rate of the carrier gas flowing through the separation column 2 (Step S12) and calculates the difference between the set flow rate and the carrier gas flow rate flowing through the separation column 2 as a "target flow rate" (Step S13). Then, the detector gas flow rate control unit 24 controls the carrier gas supply unit 14 so that the flow rate of the same type of a detector gas as the carrier gas approaches the "target flow rate" (Step S14). This operation is repeated until the analysis is completed (Step S15). As a result, the flow rate of each gas to be introduced to the detector 6 is constant, which stabilizes the detection sensitivity.

An example of a more specific mode of the aforementioned embodiment will be described with reference to FIG. 4.

In this embodiment, a purge flow path 26 for purging and a split flow path 28 for splitting are connected to the sample vaporization unit 4. A H₂ gas is used as the carrier gas, and its flow rate is controlled by a flow rate control mechanism 30. As the flow rate control mechanism 30, it is possible to use a mechanism having a function of detecting the flow rate of the gas and a function of adjusting the flow rate thereof, such as a mass flow controller.

An FID is used as a detector 6. To the FID, three types of gases including air, a H₂ gas, a makeup gas (in some cases, the flow rate of the makeup gas may be 0) as the detector gas are supplied. The flow rate of the H₂ gas and the flow rate of the makeup gas are adjusted by the flow rate control mechanisms 32 and 34, respectively. As the flow rate control mechanism 32, 34, it is possible to use a mechanism having a function of detecting the flow rate of the gas and a function of adjusting the flow rate thereof, such as a mass flow controller. Although no mechanism for adjusting the flow rate of air is shown, a mechanism similar to the flow rate control mechanism 32, 34 may be provided as a mechanism for adjusting the flow rate of air.

In this embodiment, a pressure sensor 16 is provided in the purge flow path 26. Since there is almost no gas resistance between the purge flow path 26 and the sample vaporization unit 4, the pressure detected by the pressure sensor 16 can be regarded as the pressure in the sample vaporization unit 4, that is, the inlet pressure of the separation column 2.

The flow rate of the H₂ gas flowing through the separation column 2 (also called "column flow rate") is a flow rate obtained by subtracting the purge gas flow rate discharged through the purge flow path 26 and the split gas flow rate discharged through the split flow path 28 from the H₂ gas flow rate supplied from the carrier gas supply unit 12 to the sample vaporization unit 4, and can be obtained by calculations.

In this embodiment, the supply amount of the same type of a gas as the carrier gas, that is, the detector H₂ gas among the detector gases is controlled based on the column flow rate. That is, the flow rate of the detector H₂ gas is adjusted so that the total amount of the H₂ gas introduced into the detector 6 becomes always constant.

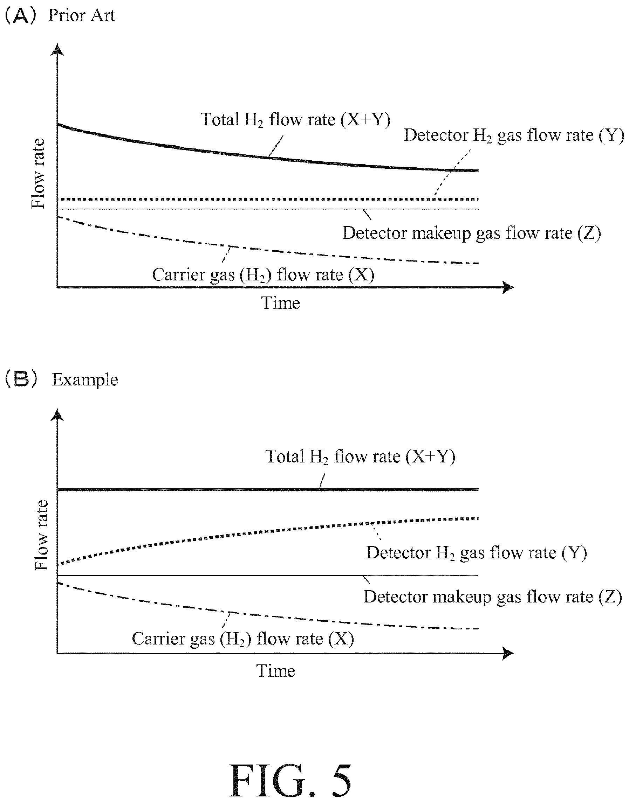

FIG. 5 shows, in a certain programmed temperature gas chromatography, a temporal change of a carrier gas flow rate (column flow rate = X) flowing through the separation column 2, a detector H₂ gas flow rate (= Y), a detector makeup gas flow rate (= Z), the total flow rate (= X + Y) of the H₂ gas introduced into the detector, and (A) and (B) show the case of a conventional technique and the case of the example, respectively.

As shown in (A) and (B) of FIG. 5, when a control to make the column linear velocity constant is performed, the carrier gas flow rate (X) decreases with time as the column temperature increases by a programmed temperature gas chromatography. In a prior art, the flow rate (X, Y) of each detector gas is always kept constant. Therefore, as shown in (A), the total flow rate (X + Y) of the H₂ gas introduced to the detector 6 also decreases as the carrier gas flow rate (X) decreases.

On the other hand, in the embodiment, since the detector H₂ gas flow rate (Y) is controlled so that the total flow rate (X + Y) of the H₂ gas introduced into the detector 6 becomes always constant, the flow rate of each gas introduced to the detector 6 is kept constant, and therefore the detection sensitivity is kept constant.

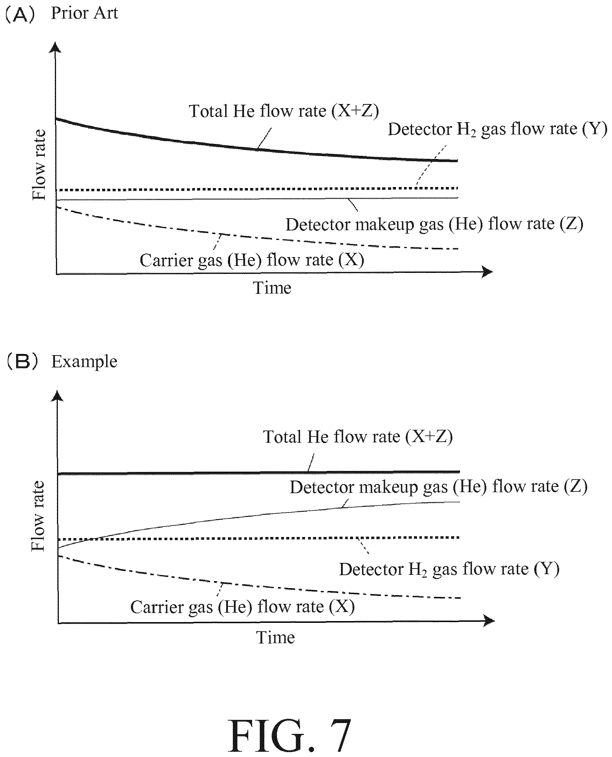

FIG. 6 shows the case in which a He gas is used as the carrier gas and the same type of a He gas as the carrier gas is used as a makeup gas of the detector 6 with the same configuration as in FIG. 4. Also in this case, as shown in FIG. 7(A), when the control to keep the column linear velocity constant by a programmed temperature gas chromatography is performed, the carrier gas flow rate (X) decreases with time, and accordingly, the total flow rate (X + Z) of the He gas introduced into the detector 6 also decreases with time.

On the other hand, as shown in FIG. 7(B), in the embodiment, since the detector He gas flow rate (Z) is controlled so that the total flow rate (X + Z) of the He gas introduced into the detector 6 becomes always constant, the flow rate of each gas introduced to the detector 6 is kept constant, and therefore the detection sensitivity is kept constant.

In the aforementioned embodiment, an FID is used as the detector 6, but a detector that can use the same type of a gas as the carrier gas as the detector gas can be similarly applied. Since the BID (Barrier Discharge Ionization Detector) controls the exhaust flow rate from the detector, when the detector gas flow rate is changed according to the column flow rate, the gas flow rate to the detector will fluctuate. Therefore, in the case of using a detector such as a BID, it is preferable to disable the function of the detector gas flow rate control unit 24 (see FIG. 1).

As described above, according to the embodiment described above, by controlling the flow rate of the same type of a detector gas as the carrier gas based on the column flow rate, even if the control to keep the column linear velocity constant is performed, the flow rate of each gas introduced to the detector 6 is kept constant, and therefore it is possible to achieve both the stabilization of resolution and the stabilization of detection sensitivity of the detector 6.

As a further additional aspect of the aforementioned embodiment, it may be configured such that whether or not to enable or disable the function of controlling the flow rate of the same type of a detector gas according to the column flow rate of the detector gas flow rate control unit 24 (see FIG. 1) can be changed. In the case in which this function of the detector gas flow rate control unit 24 is disabled, regardless of whether or not the same type of a detector gas as the carrier gas exists, the flow rate of each detector gas is controlled to a preset constant flow rate.

In addition, the carrier gas setting unit 20 and the function associated therewith, that is, the function of automatically identifying the same type of a detector gas when a type of carrier gas is set, are not necessarily an essential function. It may be configured such that a user specifies the same type of a detector gas as the carrier gas and sets so that the flow rate of the detector gas is controlled according to the carrier gas flow rate.

### Description of Reference Symbols

2 separation column
4 sample vaporization unit
6 detector
8 column oven
10 sample injection unit
12 carrier gas supply unit
14 detector gas supply unit
16 pressure sensor
18 arithmetic control unit
20 carrier gas setting unit
22 carrier gas flow rate control unit
24 detector gas flow rate control unit
26 purge flow path
28 split flow path
30, 32, 34 flow rate control mechanism

## Claims

1. A gas chromatograph comprising:
a separation column configured to separate a sample for each component;
a column oven configured to accommodate the separation column and control a temperature of the separation column;
a sample vaporization unit connected to one end side of the separation column and configured to vaporize an injected sample;
a carrier gas supply unit configured to supply a carrier gas for introducing a sample gas vaporized at the sample vaporization unit to the separation column to the sample vaporization unit;
a detector connected to the other end side of the separation column and configured to detect a sample component separated in the separation column;
a carrier gas flow rate control unit configured to control a flow rate of the carrier gas to be supplied from the carrier gas supply unit to the sample vaporization unit so that a column linear velocity becomes constant;
a detector gas supply unit configured to supply at least one type of a detector gas including a same type of a gas as the carrier gas to the detector; and
a detector gas flow rate control unit configured to control the flow rate of the detector gas to be supplied to the detector from the detector gas supply unit so that a total flow rate of the carrier gas to be introduced into the detector and a same type of a detector gas as the carrier gas becomes a preset constant flow rate.

2. The gas chromatograph as recited in claim 1, further comprising:
a carrier gas setting unit configured to set a type of a carrier gas to be supplied to the sample vaporization unit by the carrier gas supply unit,
wherein the detector gas flow rate control unit is configured to control a flow rate of the detector gas so that when the same type of a detector gas as the carrier gas set by the carrier gas setting unit is present, a total flow rate of the detector gas and the carrier gas to be introduced into the detector becomes a preset constant flow rate.
